(19) Europäisches Patentamt
European Patent Office
Office européen des brevets

(11) **EP 3 032 968 B1**

(12) **EUROPEAN PATENT SPECIFICATION**

(45) Date of publication and mention
of the grant of the patent:
**22.01.2020 Bulletin 2020/04**

(21) Application number: **15713948.6**

(22) Date of filing: **10.04.2015**

(51) Int Cl.:
*A23N 12/08* (2006.01)          *A23F 5/04* (2006.01)
*A23N 12/12* (2006.01)

(86) International application number:
**PCT/EP2015/057816**

(87) International publication number:
**WO 2015/162021 (29.10.2015 Gazette 2015/43)**

(54) **IDENTIFYING INITIAL ROASTING DEGREE OF COFFEE BEANS**

IDENTIFIZIERUNG DAS AUSGANGSRÖSTZUSTANDS VON KAFFEEBOHNEN

IDENTIFICATION D'ÉTAT INITIAL DE TORRÉFACTION DE GRAINS DE CAFÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2014 PCT/CN2014/076114
25.07.2014 EP 14178542**

(43) Date of publication of application:
**22.06.2016 Bulletin 2016/25**

(73) Proprietor: **Koninklijke Philips N.V.
5656 AE Eindhoven (NL)**

(72) Inventor: **TAN, Jingwei
5656 AE Eindhoven (NL)**

(74) Representative: **Freeke, Arnold
Philips Intellectual Property & Standards
High Tech Campus 5
5656 AE Eindhoven (NL)**

(56) References cited:
**EP-A2- 0 405 649          WO-A1-99/23888
WO-A1-2013/108283          DE-A1- 4 314 874
US-A- 4 949 632          US-A- 6 053 093
US-A1- 2006 266 229          US-A1- 2008 089 986**

**Description**

FIELD OF THE INVENTION

Embodiments of the present invention generally relate to roasting of coffee beans, and particularly, to a method, apparatus, and computer program product for identifying initial roasting degree of coffee beans.

BACKGROUND OF THE INVENTION

Enjoy fresher coffee is now becoming a great need to consumers. In order to meet different requirements of customers, segmented roasting has been proposed. As an example, for conventional green coffee beans, the moisture content usually ranges from 9% to12% with a tolerant error of 0.3%. When the segmented roasting is applied, there will be different levels of partially roasted coffee beans that have different initial states such as moisture content. For example, the moisture content of some coffee beans could be very close to 5%. The consumers could buy such partially roasted coffee beans and perform home roasting according to their personal preferences.

It would be appreciated that for the coffee beans with different levels of partial roasting, initial states of the coffee beans will be different. As used herein, the term "initial state" refers to one or more properties of the coffee beans to be consumed by the consumers. For example, the initial state of coffee beans may include initial moisture content, heat capacity, density, color, or any other properties of the coffee beans. In particular, for those partially roasted coffee beans, the initial state of coffee beans is at least indicative of the initial roasting degree of the coffee beans.

When the coffee beans are roasted by the consumers, the initial roasting degree of the coffee beans will influence the roasting effect. For example, if the coffee beans contain more moisture content, the heating temperature of the coffee beans in the first phase normally should be slowly increased. This would facilitate the heat evenly penetrating into the core of the coffee beans and make the water evenly steaming out from the core to the surface of the coffee beans. Therefore, it would be beneficial to select the roasting profile based on the initial roasting degree of the input coffee beans.

At present, however, coffee roasters usually pre-set a roasting profile to all the consumers regardless of the initial roasting degree of the coffee beans. Some coffee roasters allow the consumers to decide the roasting temperature and time. For common customers, however, manual setting of the roasting profile would probably make home roasting obscure.

In order to ensure the roasting effect and to provoke the passion and enhance the pleasure of home roasting, there is need in the art for a solution that is capable of automatically identifying the initial roasting degree of coffee beans such that the roasting profile may be controlled accordingly.

SUMMARY OF THE INVENTION

In order to address the above and other potential problems, embodiments of the present invention propose a method, apparatus, and computer program product for identifying initial roasting degree of the coffee beans.

In one aspect, embodiments of the present invention provide a method for identifying an initial roasting degree of coffee beans. The method comprises steps of: measuring information indicating temperature change of the coffee beans while the coffee beans are roasted; and identifying the initial roasting degree of the coffee beans at least partially based on the measured information. Other embodiments in this regard include a corresponding computer program product for identifying an initial roasting degree of coffee beans.

In another aspect, embodiments of the present invention provide an apparatus for identifying an initial roasting degree of coffee beans. The apparatus comprises: a measuring unit configured to measure information indicating temperature change of the coffee beans while the coffee beans are roasted; and an identifying unit configured to identify the initial roasting degree of the coffee beans at least partially based on the measured information.

US2008/089986 discloses a coffee roasting process and apparatus which allows adjustement of the parameters for the desired roasting degree, and control of the roasting process by means of temperature measurement and control. Other coffee roasting processes are described in US2006/266229 and DE4314874.

These embodiments of the present invention can be implemented to realize one or more of the following advantages. By measuring temperature change of the beans over a time period, it is possible to accurately identify the initial roasting degree of coffee beans within a relatively short period. In some embodiments, the initial roasting degree may be directly calculated. As such, the initial roasting degree of coffee beans can be identified without reliance on too much prior knowledge and experiments. Alternatively, predetermined associations between the temperature changes and different initial roasting degree of reference coffee beans may be established and used for identification of initial state. In this way, the initial roasting degree of the coffee beans can be identified quickly with low costs. By utilizing the identified initial roasting degree to control the roasting profile, good roasting effect can be achieved.

Other features and advantages of embodiments of the present invention will also be understood from the following description of exemplary embodiments when read in conjunction with the accompanying drawings, which illustrate, by way of example and principles of the present invention.

BRIEF DESCRIPTION OF THE DRAWINGS

The details of one or more embodiments of the present invention are set forth in the accompanying drawings and the description below. Other features, aspects, and advantages of the invention will become apparent from the description, the drawings, and the claims, wherein:

Fig. 1 is a flowchart illustrating a method for identifying an initial roasting degree of coffee beans in accordance with exemplary embodiments of the present invention;
Fig. 2 is a flowchart illustrating a method for identifying an initial roasting degree of coffee beans in accordance with exemplary embodiments of the present invention;
Fig. 3 is a flowchart illustrating a method for identifying an initial roasting degree of coffee beans in accordance with exemplary embodiments of the present invention;
Fig. 4 is a block diagram illustrating an apparatus for identifying an initial roasting degree of coffee beans in accordance with exemplary embodiments of the present invention; and
Fig. 5 is a block diagram illustrating a coffee roaster in which exemplary embodiments of the present invention may be implemented.

Throughout the figures, same or similar reference numbers indicates same or similar elements.

DETAILED DESCRIPTION OF EMBODIMENTS

In general, embodiments of the present invention provide a method, apparatus, and computer program product for identifying an initial roasting degree of coffee beans. For identifying a roast degree of coffee beans, we may classify the degrees from 0 (fresh green beans without any roasting) to 10 (fully and darkest roasted). In accordance with embodiments of the present invention, the initial roasting degree of coffee beans is identified within a relatively short period after the coffee beans are roasted. In some embodiments, measured temperature change of the coffee beans is compared against predetermined associations between temperature changes and the initial roasting degree of reference coffee beans. By referring to such associations, the initial roasting degree of the coffee beans may be identified efficiently and accurately. Alternatively or additionally, in some embodiments, it is also possible to identify the initial roasting degree by calculating the heat capacity of the coffee beans based on the measured temperature change.

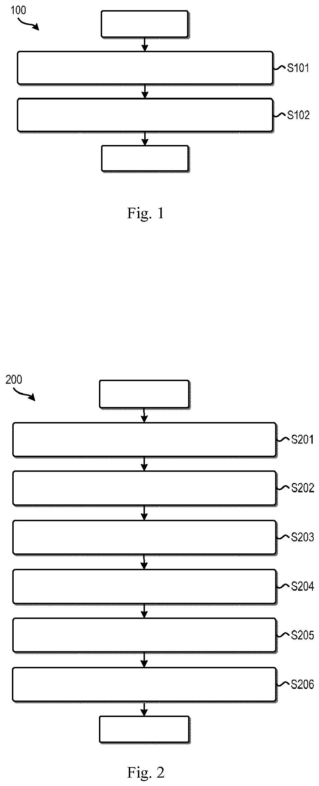

Reference is now made to Fig. 1, where a flowchart of a method 100 for identifying an initial roasting degree of coffee beans in accordance with exemplary embodiments of the present invention is shown.

At step S101, information indicating temperature change of the coffee beans is measured while the coffee beans are being roasted. As used herein, the temperature of the coffee beans may be the coffee beans' surface temperature. In some alternative embodiments, the temperature of environment in which the coffee beans are located (such as the ambient temperature) may be used as an estimation of the temperature of the coffee beans.

In accordance with embodiments of the present invention, the temperature change may be represented in various manners. For example, in some exemplary embodiments, the temperature change is the amount of the temperature change of the coffee beans within a predefined time period. Alternatively or additionally, the temperature change is in the form of elapsed time period during which the coffee beans are roasted from a predefined initial temperature to a predefined target temperature. Exemplary embodiments of the measured information will be detailed below.

In order to measure the information indicating the temperature change, a temperature sensor may be utilized. For example, the temperature sensor may be arranged in the roasting chamber of the coffee roaster. After the coffee beans are fed into the roasting chamber, the temperature sensor is configured to continuously or periodically sense and record the surface temperatures of the coffee beans to thereby measure the temperature change over a given time period. Moreover, in some exemplary embodiments, the coffee roaster is equipped with a timer to detect relevant time periods in measuring the temperature change.

In some exemplary embodiments, in order to facilitate the measurement of the information indicating the temperature change and the identification the initial roasting degree of the coffee beans, the roasting chamber is heated to a certain temperature before the coffee beans are fed and roasted. The pre-heating of the roasting chamber would be beneficial in terms of energy saving. Moreover, such "hot start" may apply suitable temperature to the coffee beans immediately with right enough heat permeation to the core of the coffee beans. In this way, the temperature balanced period is shortened.

The method 100 then proceeds to step S102, where the initial roasting degree of the coffee beans is identified at least partially based on the information measured at step S101. Depending on different forms of the measured information, embodiments of the present invention may identify the initial roasting degree in various different manners.

For example, in some exemplary embodiments, one or more properties of the coffee beans may be directly calculated based on the measured information indicating the temperature change of the coffee beans. Then the initial roasting degree of the coffee beans is identified based on predetermined associations between the calculated one or more properties and the initial roasting degree of the coffee beans. Exemplary embodiments in this regard will be discussed later.

Alternatively or additionally, in some exemplary embodiments, the associations between the temperature changes and initial roasting degree of various types of reference coffee beans are determined and stored in advance in testing phase. As used herein, the term "reference coffee" refers to those coffee beans whose initial roasting degree and possibly other relevant properties are known. In such embodiments, the initial roasting degree of the coffee beans is identified based on comparison between the measured information and the corresponding information as indicated in the predetermined associations. Exemplary embodiments in this regard will be discussed later.

Specifically, in some exemplary embodiments, the method 100 may be performed in an early stage of the roasting process. For example, the measurement and identification may begin immediately after the coffee beans are fed into the roasting chamber. Since embodiments of the present invention are capable of identifying the initial roasting degree of the coffee beans in a relatively short time period, in this way, the roasting profile for the remaining of the roasting may be controlled accordingly. For example, if it is found that the current roasting profile is not suitable for the identified initial roasting degree of the coffee beans, it is possible to select a suitable roasting profile based on the identified initial roasting degree and replace the current one.

It would be appreciated that in accordance with embodiments of the present invention, the initial roasting degree can be identified upon consumption of the coffee beans. In this way, potential effects due to change of the initial roasting degree during storage, shipment and/or sale of the coffee beans are eliminated. For example, the initial roasting degree that is detected in advance, for example, by the providers would probably be inaccurate since the moisture content usually changes over time due to loss or absorption of moisture depending on the ambient temperature. Rather, in accordance with embodiments of the present invention, the exact initial roasting degree of the coffee beans at the time of consumption can be identified.

It should be noted that the early start of the method 100 is not necessarily required in all the cases. For example, in some alternative embodiments, the measurement and identification may be initiated by the consumer. Additionally, automatic control of the roasting profile is optional as well. For example, in some alternative embodiments, the identified initial roasting degree and any relevant information may be simply displayed to the consumer, for example, via a display on the coffee roaster or any other appropriate manners. Additionally or alternatively, a suggested roasting profile, which is determined based on the identified initial roasting degree of the coffee beans, may be displayed to the consumer. As such, the consumer is capable manually changing the roasting profile according to the displayed information.

Fig. 2 shows a method 200 for identifying the initial roasting degree of the coffee beans in accordance with embodiments of the present invention. It would be appreciated that the method 200 is a specific implementation of the method 100 as discussed above. In embodiments discussed with reference to Fig. 2, the initial roasting degree of the coffee beans is identified by calculating the property (more specifically, the heat capacity) of the coffee beans based on the measured temperature change.

As shown in Fig. 2, at step S201, the initial temperature (denoted as $T_0$) of the coffee beans is measured. As discussed above, in some exemplary embodiments, the initial temperature $T_0$ may be measured by a temperature sensor arranged in the roasting chamber of the coffee roasting. Specifically, depending on the initial temperature $T_0$, the roasting chamber may be heated to an appropriate temperature prior to step S201 to save energy and shorten the heat balanced period, as discussed above.

Then, after the coffee beans are roasted for a predefined time period (denoted as $t$), the reached temperature $T_m$ of the coffee beans is measured at step S202. In this embodiment, elapse of the time period is detected by a timer. Accordingly, amount of the temperature change (denoted as $\Delta T$) of the coffee beans over the time period $t$ is calculated as follows:

$$\Delta T = T_m - T_0 \qquad\qquad\qquad (1)$$

At step S203, the quantity of heat (denoted as $Q$) applied to the coffee beans within the time period $t$ is estimated. In some exemplary embodiments, the quantity of heat $Q$ applied to the coffee beans may be estimated based on quantity of heat produced by the coffee roaster during the time period $t$. For example, in some embodiments, the quantity of heat $Q$ is calculated as follows:

$$Q = \eta \cdot P \cdot t \qquad\qquad (2)$$

where $\eta$ and $P$ represent the heat efficiency and power of the coffee roaster, respectively. It would be appreciated that for a given coffee roaster, the heat efficiency $\eta$ and power $P$ are known.

The method 200 then proceeds to step S204, where the weight (denoted as M) of the coffee beans fed into the roasting chamber is obtained. In some exemplary embodiments, the weight $M$ is predetermined. That is, in those embodiments, the consumer is only allowed to feed specified weight of coffee beans into the roasting chamber each time. For example, in some exemplary embodiments, the coffee roaster may provide several optional weights for consumer's selection. Alternatively, the weight $M$ is received from the user. For example, the coffee roaster may provide a mechanism that allows the user to input the weight of the coffee beans fed into the roasting chamber. Alternatively or additionally, in some exemplary embodiments, a weight sensor may be arranged in the coffee roaster to measure the weight of coffee beans fed into the roasting chamber.

Next, at step S205, the heat capacity (denoted as $C$) of the coffee beans is calculated based on the amount of the temperature change $\Delta T$ within the time period $t$, the quantity of heat $Q$, and the weight $M$ of the coffee beans. In some exemplary embodiments, the heat capacity $C$ is calculated as follows:

$$C = Q / (M \cdot \Delta T) \qquad\qquad (3)$$

Given the calculated heat capacity $C$ of the coffee beans, the initial roasting degree of the coffee beans is identified at step S206 based on prior knowledge. More specifically, for various types of reference coffee beans with different initial roasting degree, their associated heat capacities (denoted as $C_r$) are measured and stored in advance. Accordingly, the calculated heat capacity $C$ of the coffee beans is compared with the prestored heat capacities $C_r$ to find a most matching one. The initial roasting degree corresponding to the matching heat capacity $C_r$ is determined as the initial roasting degree of the coffee beans being roasted.

It can be seen in the above embodiments, the heating time $t$ is predefined. In some alternative embodiments, it is also possible to predefine the amount of temperature change ($\Delta T$) instead of the heating time $t$. Accordingly, what is measured at step S202 is the time period $t$ elapsed upon the temperature of the coffee beans reaching the target temperature $T_m = T_0 + \Delta T$, rather than the target temperature $T_m$. That is, in such embodiments, the term $\Delta T$ in equation (3) is known and the term $t$ in equation (2) is measured at step S202.

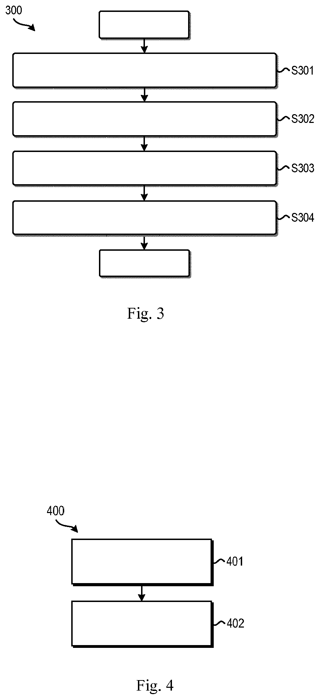

Fig. 3 shows a method 300 for identifying the initial roasting degree of the coffee beans in accordance with other exemplary embodiments of the present invention. The method 300 is a specific implementation of the method 100 as discussed above. In embodiments discussed with reference to Fig. 3, the initial roasting degree of the coffee beans is identified by comparing the measured information with the predetermined reference information associated with various types of reference coffee beans.

Generally speaking, in the embodiments discussed with reference to Fig. 3, different types of coffee beans with respective initial roasting degree can be used as reference coffee beans. As an example, in one embodiment, there are three types of reference coffee beans. The reference coffee beans of type A and type B are partially roasted ones with different initial roasting degrees. As a result, the reference coffee beans of type A and type B have different colors (type A is more dark brown and type B is more of yellowish) and moisture content. The reference coffee beans of type C are green coffee beans without subject to any roasting process and therefore are green and have more moisture content. Table 1 shows the information of reference coffee beans where the initial roasting degree are represented by the moisture content. It should be noted that the example shown in Table 1 is merely for the purpose of illustration, without limiting the number, type, value or any other aspects of the reference coffee beans.

**Table 1**

| Type | Moisture content | Note |
| --- | --- | --- |
| Type A | 5.7% | Partially roasted coffee bean (near the first cracking): quite dry already. |
| Type B | 8.4% | Partially roasted coffee bean. |
| Type C | 11.4% | Green coffee bean: contains more moisture content. |

In the testing phase, associations between different initial roasting degree of the reference coffee beans and respective reference information are determined and recorded, each piece of the reference information indicating the temperature change of the associated reference coffee beans while the associated reference coffee beans are roasted.

Then such predetermined associations may be used to identify the initial status of any given coffee beans.

To be specific, as shown in Fig. 3, the roasting chamber to be used for roasting the coffee beans is pre-heated to a certain temperature at optional step S301. As discussed above, this would be beneficial to save power and shorten the temperature balanced period. The method 300 then proceeds to step S302 where the coffee beans are roasted to a predefined initial temperature $T_0$.

Next, at step S303, depending on the form of the predetermined associations of the reference coffee beans, information indicating the temperature change of the coffee beans while the coffee beans are roasted is measured. Then, the initial roasting degree of the coffee beans is identified by comparing the measured information to the reference information in the predetermined associations at step S304.

In particular, in some exemplary embodiments, the reference information in the predetermined associations at least includes reference temperatures of the associated reference coffee beans after the coffee beans are roasted from the predefined initial temperature $T_0$ to a target temperature $T_m$. That is, in those embodiments, the initial and target temperatures $T_0$ and $T_m$ are predefined. In the testing phase, for each type of the reference coffee beans, the reference time period (denoted as $t_r$) during which the reference coffee beans are roasted from $T_0$ to $T_m$ is measured. The reference time periods $t_r$ are then stored in association with the respective initial roasting degree of the reference coffee beans. Specifically, in some exemplary embodiments, there may be a plurality of target temperatures $T_m$. Accordingly, for each of the target temperatures $T_m$, the reference time period $t_r$ for each type of the reference coffee beans is measured and stored.

As an example, Table 2 shows exemplary associations between the initial roasting degree and the reference information. In this case, the reference information includes reference time period $t_r$ (in second) for the reference coffee beans to reach the respective target temperatures $T_m$ from the predefined initial temperature $T_0$ (not shown in the table). In this example, there are four predefined target temperature $T_m$, namely, 190°C, 210°C, 220°C and 230°C. In the testing phase, a home coffee roaster is used to roast the coffee beans. In this example, the coffee roaster has a heating plate at the bottom of the roasting chamber, a mixing rod to mix the coffee beans during the roasting, and a temperature sensor inside the roasting chamber which is in contact with the coffee beans to sense the surface temperature of the coffee beans. The voltage and heating power of the coffee roaster are 120v and 800w, respectively. The roasting chamber is a cylinder with a diameter of 7cm and a height of 19cm.

In operation, the roasting chamber is pre-heated to 230°C. It would be appreciated that as the coffee beans are fed into the roaster chamber, the chamber's temperature will drop down. For each types of A, B and C, the reference coffee beans of 30 grams are fed into the roasting chamber of the coffee roaster. The initial temperature $T_0$ is set as the surface temperature of the reference coffee beans before being fed into the roasting chamber. Normally, the initial temperature is near the room temperature which is around 20°C in this example. Alternatively, the reference coffee beans may be processed to any specified initial temperature. Then the time period $t_r$ used to reach the respective target temperature $T_m$ are measured and recorded, as shown in Table 2. It should be noted that the specific values in this example are merely for the purpose of illustration, without limiting the scope of the present invention.

**Table 2**

| Initial roasting degree | Reference information (reference time period $t_r$) | | | |
|---|---|---|---|---|
| | $T_m$ = 190°C | $T_m$ = 210°C | $T_m$ = 220°C | $T_m$ = 230°C |
| Initial roasting degree of type A | 9.3 ± 1.15 | 37.3 ± 2.30 | 76 ± 3.46 | 108 ± 7.21 |
| Initial roasting degree of type B | 14.7 ± 2.31 | 50.7 ± 2.51 | 86 ± 2 | 140 ± 4 |
| Initial roasting degree of type C | 27.3 ± 1.15 | 62 ± 5.29 | 94.67 ± 4.16 | 166 ± 4.2 |

Accordingly, in such embodiments, the coffee beans with the predefined initial temperature (for example, 20°C in the example discussed with reference to Table 2) are fed into the roasting chamber. At step S303, the measured information at least includes measured time period $t$ during which the coffee beans in the roasting chamber are roasted from the initial temperature $T_0$ to a selected target temperature(s) $T_m$. Then, at step S304, the measured time period $t$ is compared with the reference time periods $t_r$ for the selected target temperature $T_m$ to find a matching reference time period $t_r$. The initial roasting degree associated with the matching reference time period $t_r$ is determined as the initial roasting degree of the coffee beans in consideration.

As an example, it is assumed that the time period $t$ during which the coffee beans are roasted from $T_0$ to a selected target temperature $T_m$ = 210°C is 36.5 seconds. The measured time period $t$ = 36.5 is compared with the reference time periods $t_r$ for $T_m$ = 210°C in the predetermined associations. It is found that for the selected target temperature $T_m$ = 210°C, the measured time period $t$ matches the reference time period $t_r$ associated with the reference coffee beans of type A. Accordingly, the initial state of the reference coffee beans of type A is determined as the initial roasting degree of the target coffee beans in the roasting chamber.

Specifically, in some exemplary embodiments, more than one target temperature $T_m$ may be utilized. Accordingly, a plurality of time periods $t$ are measured at step S303 for different target temperatures $T_m$. At step S304, each of the measured time periods $t$ is compared with the reference time periods $t_r$ for the respective target temperature $T_m$, thereby obtaining a plurality of candidate initial roasting degree. Then the initial roasting degree of the coffee beans may be identified based on those candidate initial roasting degree, for example, by the majority decision. In this way, the initial roasting degree of the coffee beans can be identified more accurately.

Alternatively or additionally, in some exemplary embodiments, the reference information at least includes reference temperatures of the associated reference coffee beans after they are roasted from an initial temperature $T_0$ for a time period $t$. That is, in such embodiments, the initial temperature $T_0$ and the heating time $t$ are determined in advance. Accordingly, in the testing phase, for each type of the reference coffee beans, the reference temperature (denoted as $T_r$) of the reference coffee after being roasted from the initial temperature $T_0$ for the predefined time period $t$ is measured. The reference temperatures $T_r$ are then stored in association with the respective initial roasting degree of the reference coffee beans. Specifically, in some exemplary embodiments, there may be a plurality of predefined time periods $t$. Accordingly, for each of the time periods $t$, the reference temperature $T_r$ for each type of the reference coffee beans is measured and stored.

In such embodiments, the coffee beans with the predefined initial temperature are fed into the roasting chamber. At step S303, the measured information at least includes measured temperature $T_m$ of the coffee beans after the coffee beans are roasted from the initial temperature $T_0$ for a selected time period(s) $t$. Then, at step S304, the measured temperature $T_m$ is compared with the reference temperatures $T_r$ for the selected time period $t$ to find a matching reference temperature $T_r$. The initial roasting degree associated with the matching reference temperature $T_r$ is determined as the initial roasting degree of the coffee beans in consideration.

In some exemplary embodiments, more than one predefined time $t$ may be utilized. Accordingly, a plurality of temperature $T_m$ are measured at step S303 for different time periods $t$. At step S304, each of the measured temperature $T_m$ is compared with the reference temperatures $T_r$ for the respective time period $t$, thereby obtaining a plurality of candidate initial roasting degree. Then the initial roasting degree of the coffee beans may be identified based on those candidate initial roasting degree to improve the identification accuracy.

In some exemplary embodiments, the predetermined associations may have an additional dimension of weight. That is, in the testing phase, for the same type of reference beans, it is possible to pre-store the associations between the reference information indicating the temperature changes and the initial roasting degree for different weights. In such embodiments, in method 300, the weight of the coffee beans fed into the coffee roaster is obtained. As discussed above, in accordance with embodiments of the present invention, the weight of the coffee beans may be fixed, received from the user, or measured by a weight sensor. At step S304, the weight of the coffee beans in the coffee roaster may be first used to retrieve corresponding reference information from the predetermined associations for comparison with the measured information obtained at step S303.

Fig. 4 shows a block diagram of an apparatus 400 for identifying the initial roasting degree of the coffee beans. As shown, in accordance with embodiments of the present invention, the apparatus 400 comprises a measuring unit 401 and an identifying unit 402. The measuring unit 401 is configured to measure information indicating temperature change of the coffee beans while the coffee beans are roasted. The identifying unit 401 is configured to identify the initial roasting degree of the coffee beans at least partially based on the measured information.

In some exemplary embodiments, the measured information includes amount of the temperature change of the coffee beans over a time period. In such embodiments, the apparatus 400 may further comprise: a heat quantity estimating unit configured to estimate quantity of heat applied to the coffee beans within the time period; a weight obtaining unit configured to obtain weight of the coffee beans; and a heat capacity calculating unit configured to calculate heat capacity of the coffee beans based on the amount of the temperature change, the quantity of heat and the weight of the coffee beans.

In some exemplary embodiments, the identifying unit 401 is configured to identify the initial roasting degree of the coffee beans at least partially based on the measured information, according to predetermined associations between different initial roasting degree of reference coffee beans and respective reference information, the reference information indicating temperature changes of the associated reference coffee beans while the associated reference coffee beans are roasted.

Specifically, in some exemplary embodiments, the measured information includes a measured temperature of the coffee beans after the coffee beans are roasted from an initial temperature for a predefined time period, and the reference information includes reference temperatures of the associated reference coffee beans after the associated reference coffee beans are roasted from the initial temperature for the predefined time period. In such embodiments, the identifying unit 401 is configured to identify the initial roasting degree of the coffee beans by matching the measured temperature and the reference temperatures.

Alternatively or additionally, in some exemplary embodiments, the measured information includes a measured time period during which the coffee beans are roasted from an initial temperature to a predefined temperature, and the reference information includes reference time periods during which the associated reference coffee beans are roasted from the initial temperature to the predefined temperature. In such embodiments, the identifying unit 401 is configured to identify the initial roasting degree of the coffee beans by matching the measured time period and the reference time periods.

In some exemplary embodiments, the apparatus 400 may comprise a chamber heating unit configured to heat a roasting chamber to be used for roasting the coffee beans for measuring the information indicating the temperature change of the coffee beans.

It should be noted that the apparatus 400 may be implemented as hardware, software/firmware, or any combination thereof. In some embodiments, one or more units in the apparatus 400 may be implemented as software modules. For example, embodiments of the present invention may be embodied as a computer program product that is tangibly stored on a non-transient computer-readable medium. The computer program product comprises machine executable instructions which, when executed, cause the machine to perform steps of any of the methods 100, 200 and 300. Alternatively or additionally, some or all of the units in the apparatus 400 may be implemented using hardware modules like integrated circuits (ICs), application specific integrated circuits (ASICs), system-on-chip (SOCs), field programmable gate arrays (FPGAs), and so on forth.

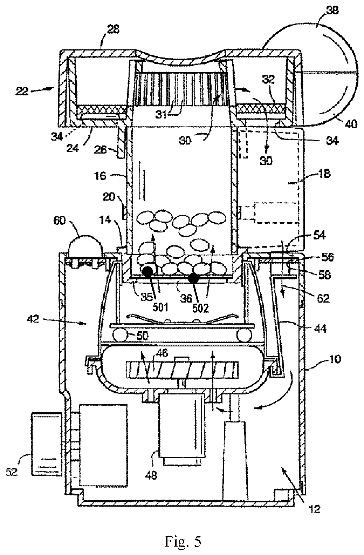

Moreover, in some exemplary embodiments, the apparatus 400 may be integrated with the coffee roaster. As an example, Fig. 5 shows a coffee roaster 500 in which the apparatus 400 in accordance with exemplary embodiments of the present invention is implemented. As shown, the coffee roaster 500 comprises a roasting chamber 16 and a heater assembly 42 in a housing 10. As an example, a fan heater 42 may be used to blow hot air upwardly through the roasting chamber. The hot air will perform both the heating and the mixing function during the roasting. Some coffee roasting will not use hot air for heating, and the scope of the present invention is not limited in this regard.

Specifically, in accordance with embodiments of the present invention, the apparatus 400 is integrated with the coffee chamber 500. For example, in some embodiments, a temperature sensor 501 is arranged in the roasting chamber 16 to measure the temperature of the coffee beans fed into the roasting chamber 16. As discussed above, in some exemplary embodiments, the temperature sensor 501 is a part of the measuring unit 401 in the apparatus 400. Additionally, in this embodiment, the coffee roaster 501 is equipped with a timer (not shown) configured to detect relevant time periods in measuring the temperature change. Optionally, in those embodiments where it is necessary to measure the weight of the coffee beans, the weight obtaining unit of the apparatus 400, in form of a weight sensor 502, is arranged in the coffee roaster. For example, the weight sensor 502 may be also arranged in the roasting chamber 16. It should be noted that the locations of various units of the apparatus 400 in the coffee roaster 500 are just for the purpose of illustration, without limiting the scope of the present invention.

In general, the various exemplary embodiments may be implemented in hardware or special purpose circuits, software, logic or any combination thereof. Some aspects may be implemented in hardware, while other aspects may be implemented in firmware or software which may be executed by a controller, microprocessor or other computing device. While various aspects of the exemplary embodiments of the present invention are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

In the context of the present invention, a machine readable medium may be any tangible medium that can contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the present invention may be written in any combination of one or more programming languages. These computer program codes may be provided to a processor of a general purpose computer, special purpose computer, or other programmable data processing apparatus, such that the program codes, when executed by the processor of the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination.

Various modifications, adaptations to the foregoing exemplary embodiments of this invention may become apparent to those skilled in the relevant arts in view of the foregoing description, when read in conjunction with the accompanying drawings. Any and all modifications will still fall within the scope of the non-limiting and exemplary embodiments of this invention. Furthermore, other embodiments of the inventions set forth herein will come to mind to one skilled in the art to which these embodiments of the invention pertain having the benefit of the teachings presented in the foregoing descriptions and the drawings.

Therefore, it will be appreciated that the embodiments of the invention are not to be limited to the specific embodiments disclosed and that modifications and other embodiments are intended to be included within the scope of the appended claims. Although specific terms are used herein, they are used in a generic and descriptive sense only and not for purposes of limitation.

## Claims

1. A method (100, 200, 300) for identifying an initial roasting degree of coffee beans, the method comprising steps of:

   measuring (S101, S202, S303) information indicating temperature change of the coffee beans while the coffee beans are roasted; and
   identifying (S102, S206, S304) the initial roasting degree of the coffee beans at least partially based on the measured information.

2. The method according to Claim 1, wherein the measured information includes amount of the temperature change of the coffee beans over a time period, and wherein the step of identifying the initial roasting degree of the coffee beans comprises steps of:

   estimating (S203) quantity of heat applied to the coffee beans within the time period;
   obtaining (S204) weight of the coffee beans; and
   calculating (S205) heat capacity of the coffee beans based on the amount of the temperature change, the quantity of heat and the weight of the coffee beans.

3. The method according to Claim 1, wherein the step of identifying the initial roasting degree of the coffee beans comprises a step of:
   identifying (S304) the initial roasting degree of the coffee beans at least partially based on the measured information, according to predetermined associations between different initial roasting degree of reference coffee beans and respective reference information, the reference information indicating temperature changes of the associated reference coffee beans while the associated reference coffee beans are roasted.

4. The method according to Claim 3,
   wherein the measured information includes a measured temperature of the coffee beans after the coffee beans are roasted from an initial temperature for a predefined time period,
   wherein the reference information includes reference temperatures of the associated reference coffee beans after the associated reference coffee beans are roasted from the initial temperature for the predefined time period, and
   wherein the step of identifying the initial roasting degree of the coffee beans comprises a
   step of identifying (S304) the initial roasting degree of the coffee beans by comparing the measured temperature and the reference temperatures.

5. The method according to Claim 3,
   wherein the measured information includes a measured time period during which the coffee beans are roasted from an initial temperature to a predefined temperature,
   wherein the reference information includes reference time periods during which the associated reference coffee beans are roasted from the initial temperature to the predefined temperature, and

wherein the step of identifying the initial roasting degree of the coffee beans comprises a step of identifying (S304) the initial roasting degree of the coffee beans by comparing the measured time period and the reference time periods.

6. The method according to Claim 1, further comprising:
heating (S301) a roasting chamber (16) to be used for roasting the coffee beans for measuring the information indicating the temperature change of the coffee beans.

7. The method according to any of Claims 1 to 6, wherein the initial roasting degree of the beans at least indicates an initial roasting degree of the coffee beans.

8. A method for controlling roasting of coffee beans, comprising a step of:
controlling a roasting profile for the roasting at least partially based on an initial roasting degree of the coffee beans, the initial roasting degree of the coffee beans identified by the method according to any of Claims 1-7.

9. An apparatus (400) for identifying an initial roasting degree of coffee beans, the apparatus comprising:

a measuring unit (401) configured to measure information indicating temperature change of the coffee beans while the coffee beans are roasted; and
an identifying unit (402) configured to identify the initial roasting degree of the coffee beans at least partially based on the measured information.

10. The apparatus according to Claim 9, wherein the measured information includes amount of the temperature change of the coffee beans over a time period, and wherein the apparatus further comprises:

a heat quantity estimating unit configured to estimate quantity of heat applied to the coffee beans within the time period;
a weight obtaining unit configured to obtain weight of the coffee beans; and
a heat capacity calculating unit configured to calculate heat capacity of the coffee beans based on the amount of the temperature change, the quantity of heat and the weight of the coffee beans.

11. The apparatus according to Claim 9, wherein the identifying unit is configured to identify the initial roasting degree of the coffee beans at least partially based on the measured information, according to predetermined associations between different initial roasting degree of reference coffee beans and respective reference information, the reference information indicating temperature changes of the associated reference coffee beans while the associated reference coffee beans are roasted.

12. The apparatus according to Claim 11,
wherein the measured information includes a measured temperature of the coffee beans after the coffee beans are roasted from an initial temperature for a predefined time period,
wherein the reference information includes reference temperatures of the associated reference coffee beans after the associated reference coffee beans are roasted from the initial temperature for the predefined time period, and
wherein the identifying unit is configured to identify the initial roasting degree of the coffee beans by comparing the measured temperature and the reference temperatures.

13. The apparatus according to Claim 11,
wherein the measured information includes a measured time period during which the coffee beans are roasted from an initial temperature to a predefined temperature,
wherein the reference information includes reference time periods during which the associated reference coffee beans are roasted from the initial temperature to the predefined temperature, and
wherein the identifying unit is configured to identify the initial roasting degree of the coffee beans by comparing the measured time period and the reference time periods.

14. The apparatus according to Claim 9, further comprising:
a chamber heating unit configured to heat a roasting chamber (16) to be used for roasting the coffee beans for measuring the information indicating the temperature change of the coffee beans.

15. A computer program product for identifying an initial roasting degree of coffee beans, the computer program product being tangibly stored on a non-transient computer-readable medium and comprising machine executable instructions which, when executed on an apparatus according to claim 9, cause said apparatus to perform steps of the method according to any of Claims 1 to 7.

**Patentansprüche**

1. Verfahren (100, 200, 300) zum Identifizieren eines anfänglichen Röstgrads von Kaffeebohnen, wobei das Verfahren folgende Schritte umfasst:

   Messen (S101, S202, S303) von Informationen, die eine Temperaturänderung der Kaffeebohnen, während die Kaffeebohnen geröstet werden, angeben; und
   Identifizieren (S102, S206, S304) des anfänglichen Röstgrads der Kaffeebohnen mindestens teilweise basierend auf den gemessenen Informationen.

2. Verfahren nach Anspruch 1, wobei die gemessene Information eine Menge der Temperaturänderung der Kaffeebohnen während einer Zeitspanne beinhaltet, und wobei der Schritt des Identifizierens des anfänglichen Röstgrads der Kaffeebohnen folgende Schritte umfasst:

   Schätzen (S203) der Wärmemenge, die an die Kaffeebohnen innerhalb der Zeitspanne angelegt wird;
   Erhalten (S204) des Gewichts der Kaffeebohnen; und
   Berechnen (S205) der Wärmekapazität der Kaffeebohnen basierend auf der Menge an Temperaturänderung, der Wärmemenge und dem Gewicht der Kaffeebohnen.

3. Verfahren nach Anspruch 1, wobei der Schritt des Identifizierens des anfänglichen Röstgrads der Kaffeebohnen einen Schritt:
   des Identifizierens (S304) des anfänglichen Röstgrads der Kaffeebohnen mindestens teilweise basierend auf der gemessenen Information, gemäß vorbestimmten Assoziationen zwischen unterschiedlichem anfänglichem Röstgrad von Referenzkaffeebohnen und jeweiligen Referenzinformationen umfasst, wobei die Referenzinformationen Temperaturänderungen der assoziierten Referenzkaffeebohnen während des Röstens der assoziierten Referenzkaffeebohnen angeben.

4. Verfahren nach Anspruch 3,
   wobei die gemessene Information eine gemessene Temperatur der Kaffeebohnen, nachdem die Kaffeebohnen von einer anfänglichen Temperatur während einer vorbestimmten Zeitspanne geröstet wurden, beinhaltet,
   wobei die Referenzinformation Referenztemperaturen der assoziierten Referenzkaffeebohnen, nachdem die assoziierten Referenzkaffeebohnen ausgehend von der anfänglichen Temperatur während der vorbestimmten Zeitspanne geröstet wurden, beinhaltet, und
   wobei der Schritt des Identifizierens des anfänglichen Röstgrads der Kaffeebohnen einen Schritt des Identifizierens (S304) des anfänglichen Röstgrads der Kaffeebohnen durch Vergleichen der gemessenen Temperatur mit den Referenztemperaturen umfasst.

5. Verfahren nach Anspruch 3,
   wobei die gemessene Information eine gemessene Zeitspanne beinhaltet, während der die Kaffeebohnen ausgehend von einer anfänglichen Temperatur bis zu einer vorbestimmten Temperatur geröstet werden,
   wobei die Referenzinformation Referenzzeitspannen beinhaltet, während der die assoziierten Referenzkaffeebohnen ausgehend von der anfänglichen Temperatur bis zu der vordefinierten Temperatur geröstet werden, und
   wobei der Schritt des Identifizierens des anfänglichen Röstgrads der Kaffeebohnen einen Schritt des Identifizierens (S304) des anfänglichen Röstgrads der Kaffeebohnen durch Vergleichen der gemessenen Zeitspanne und der Referenzzeitspannen umfasst.

6. Verfahren nach Anspruch 1, das weiter Folgendes umfasst:
   Erhitzen (S301) einer Röstkammer (16), die für das Rösten der Kaffeebohnen zu verwenden ist, um die Information zu messen, die die Temperaturänderung der Kaffeebohnen angibt.

7. Verfahren nach einem der Ansprüche 1 bis 6, wobei der anfängliche Röstgrad der Bohnen mindestens einen anfänglichen Röstgrad der Kaffeebohnen angibt.

8. Verfahren zum Steuern des Röstens von Kaffeebohnen, das einen Schritt:

des Steuerns eines Röstprofils für das Rösten mindestens teilweise basierend auf einem anfänglichen Röstgrad der Kaffeebohnen umfasst, wobei der anfängliche Röstgrad der Kaffeebohnen durch das Verfahren nach einem der Ansprüche 1-7 identifiziert wird.

9. Einrichtung (400) zum Identifizieren eines anfänglichen Röstgrads von Kaffeebohnen, wobei die Einrichtung Folgendes umfasst:

eine Messeinheit (401), die konfiguriert ist, um Informationen zu messen, die eine Temperaturänderung der Kaffeebohnen angeben, während die Kaffeebohnen geröstet werden; und
eine Identifikationseinheit (402), die konfiguriert ist, um den anfänglichen Röstgrad der Kaffeebohnen mindestens teilweise basierend auf der gemessenen Information zu identifizieren.

10. Einrichtung nach Anspruch 9, wobei die gemessene Information eine Menge einer Temperaturänderung der Kaffeebohnen während einer Zeitspanne beinhaltet, und wobei die Einrichtung weiter Folgendes umfasst:

eine Wärmemengeschätzungseinheit, die konfiguriert ist, um eine Wärmemenge, die an die Kaffeebohnen innerhalb der Zeitspanne angelegt wird, zu schätzen;
eine Gewichtserhaltungseinheit, die konfiguriert ist, um das Gewicht der Kaffeebohnen zu erhalten; und
eine Wärmekapazitätsberechnungseinheit, die konfiguriert ist, um die Wärmekapazität der Kaffeebohnen basierend auf der Temperaturänderungsmenge, der Wärmemenge und dem Gewicht der Kaffeebohnen zu berechnen.

11. Einrichtung nach Anspruch 9, wobei die Identifikationseinheit konfiguriert ist, um den anfänglichen Röstgrad der Kaffeebohnen mindestens teilweise basierend auf der gemessenen Information gemäß vorbestimmten Assoziationen zwischen unterschiedlichem anfänglichem Referenzröstgrad der Kaffeebohnen und jeweiligen Referenzinformationen zu identifizieren, wobei die Referenzinformationen Temperaturänderungen der assoziierten Referenzkaffeebohnen, während die assoziierten Referenzkaffeebohnen geröstet werden, angeben.

12. Einrichtung nach Anspruch 11,
wobei die gemessene Information eine gemessene Temperatur der Kaffeebohnen, nachdem die Kaffeebohnen ausgehend von einer anfänglichen Temperatur während einer vorbestimmten Zeitspanne geröstet wurden, beinhaltet,
wobei die Referenzinformation Referenztemperaturen der assoziierten Referenzkaffeebohnen, nachdem die assoziierten Referenzkaffeebohnen ausgehend von der anfänglichen Temperatur während der vordefinierten Zeitspanne geröstet wurden, beinhaltet, und
wobei die Identifikationseinheit konfiguriert ist, um den anfänglichen Röstgrad der Kaffeebohnen durch Vergleichen der gemessenen Temperatur mit den Referenztemperaturen zu identifizieren.

13. Einrichtung nach Anspruch 11,
wobei die gemessene Information eine gemessene Zeitspanne, während der die Kaffeebohnen ausgehend von einer anfänglichen Temperatur bis zu einer vordefinierten Temperatur geröstet werden, beinhaltet,
wobei die Referenzinformation Referenzzeitspannen beinhaltet, während der die assoziierten Referenzkaffeebohnen ausgehend von der anfänglichen Temperatur bis zu der vordefinierten Temperatur geröstet werden, und
wobei die Identifikationseinheit konfiguriert ist, um den anfänglichen Röstgrad der Kaffeebohnen durch Vergleichen der gemessenen Zeitspanne mit den Referenzzeitspannen zu identifizieren.

14. Einrichtung nach Anspruch 9, die weiter Folgendes umfasst:
eine Kammerheizeinheit, die konfiguriert ist, um eine Röstkammer (16), die zum Rösten der Kaffeebohnen zu verwenden ist, zum Messen der Information zu erhitzen, die die Temperaturänderung der Kaffeebohnen angibt.

15. Computerprogrammprodukt zum Identifizieren eines anfänglichen Röstgrads von Kaffeebohnen, wobei das Computerprogrammprodukt konkret auf einem nichtflüchtigen computerlesbaren Medium gespeichert ist und maschinenausführbare Anweisungen umfasst, die, wenn sie auf einer Einrichtung nach Anspruch 9 ausgeführt werden, die Einrichtung veranlassen, Schritte des Verfahrens nach einem der Ansprüche 1 bis 7 auszuführen.

**Revendications**

1. Procédé (100, 200, 300) pour l'identification d'un degré initial de torréfaction de grains de café, le procédé comprenant les étapes de :

   la mesure (S101, S202, S303) d'informations indiquant le changement de température des grains de café alors que les grains de café sont torréfiés ; et
   l'identification (S102, S206, S304) du degré initial de torréfaction des grains de café au moins partiellement sur la base des informations mesurées.

2. Procédé selon la revendication 1, dans lequel les informations mesurées incluent la quantité du changement de température des grains de café sur une période de temps, et dans lequel l'étape d'identification du degré initial de torréfaction des grains de café comprend les étapes de :

   l'estimation (S203) de la quantité de chaleur appliquée aux grains de café dans la période de temps ;
   l'obtention (S204) du poids des grains de café ; et
   le calcul (S205) de la capacité calorifique des grains de café sur la base de la quantité du changement de température, de la quantité de chaleur et du poids des grains de café.

3. Procédé selon la revendication 1, dans lequel l'étape d'identification du degré initial de torréfaction des grains de café comprend une étape de :
   l'identification (S304) du degré initial de torréfaction des grains de café au moins partiellement sur la base des informations mesurées, selon des associations prédéterminées entre un degré initial différent de torréfaction de grains de café de référence et des informations de référence respectives, les informations de référence indiquant des changements de température des grains de café de référence associés alors que les grains de café de référence associés sont torréfiés.

4. Procédé selon la revendication 3,
   dans lequel les informations mesurées incluent une température mesurée des grains de café après que les grains de café ont été torréfiés depuis une température initiale pendant une période de temps prédéfinie,
   dans lequel les informations de référence incluent des températures de référence des grains de café de référence associés après que les grains de café de référence associés ont été torréfiés depuis la température initiale pendant la période de temps prédéfinie, et
   dans lequel l'étape d'identification du degré initial de torréfaction des grains de café comprend une étape d'identification (S304) du degré initial de torréfaction des grains de café par comparaison de la température mesurée et des températures de référence.

5. Procédé selon la revendication 3,
   dans lequel les informations mesurées incluent une période de temps mesurée pendant laquelle les grains de café sont torréfiés depuis une température initiale à une température prédéfinie,
   dans lequel les informations de référence incluent des périodes de temps de référence pendant lesquelles les grains de café de référence associés sont torréfiés depuis la température initiale à la température prédéfinie, et
   dans lequel l'étape d'identification du degré initial de torréfaction des grains de café comprend une étape d'identification (S304) du degré initial de torréfaction des grains de café par comparaison de la période de temps mesurée et des périodes de temps de référence.

6. Procédé selon la revendication 1, comprenant en outre :
   le chauffage (S301) d'une chambre de torréfaction (16) à utiliser pour la torréfaction des grains de café pour la mesure des informations indiquant le changement de température des grains de café.

7. Procédé selon l'une quelconque des revendications 1 à 6, dans lequel le degré initial de torréfaction des grains indique au moins un degré initial de torréfaction des grains de café.

8. Procédé de commande de la torréfaction de grains de café, comprenant une étape de :
   la commande d'un profil de torréfaction pour la torréfaction au moins partiellement sur la base d'un degré initial de torréfaction des grains de café, le degré initial de torréfaction des grains de café étant identifié par le procédé selon l'une quelconque des revendications 1 à 7.

9. Appareil (400) pour l'identification d'un degré initial de torréfaction de grains de café, l'appareil comprenant :

une unité de mesure (401) configurée pour mesurer des informations indiquant un changement de température des grains de café alors que les grains de café sont torréfiés ; et
une unité d'identification (402) configurée pour identifier le degré initial de torréfaction des grains de café au moins partiellement sur la base des informations mesurées.

10. Appareil selon la revendication 9, dans lequel les informations mesurées incluent la quantité du changement de température des grains de café sur une période de temps, et dans lequel l'appareil comprend en outre :

une unité d'estimation de quantité de chaleur configurée pour estimer la quantité de chaleur appliquée aux grains de café dans la période de temps ;
une unité d'obtention de poids configurée pour obtenir le poids des grains de café ; et
une unité de calcul de capacité calorifique configurée pour calculer la capacité calorifique des grains de café sur la base de la quantité du changement de température, de la quantité de chaleur et du poids des grains de café.

11. Appareil selon la revendication 9, dans lequel l'unité d'identification est configurée pour identifier le degré initial de torréfaction des grains de café au moins partiellement sur la base des informations mesurées, selon des associations prédéterminées entre un degré initial différent de torréfaction de grains de café de référence et des informations de référence respectives, les informations de référence indiquant des changements de température des grains de café de référence associés alors que les grains de café de référence associés sont torréfiés.

12. Appareil selon la revendication 11,
dans lequel les informations mesurées incluent une température mesurée des grains de café après que les grains de café ont été torréfiés depuis une température initiale pendant une période de temps prédéfinie,
dans lequel les informations de référence incluent des températures de référence des grains de café de référence associés après que les grains de café de référence associés ont été torréfiés depuis la température initiale pendant la période de temps prédéfinie, et
dans lequel l'unité d'identification est configurée pour identifier le degré initial de torréfaction des grains de café par comparaison de la température mesurée et des températures de référence.

13. Appareil selon la revendication 11,
dans lequel les informations mesurées incluent une période de temps mesurée pendant laquelle les grains de café sont torréfiés depuis une température initiale à une température prédéfinie,
dans lequel les informations de référence incluent des périodes de temps de référence pendant lesquelles les grains de café de référence associés sont torréfiés depuis la température initiale à la température prédéfinie, et
dans lequel l'unité d'identification est configurée pour identifier le degré initial de torréfaction des grains de café par comparaison de la période de temps mesurée et des périodes de temps de référence.

14. Appareil selon la revendication 9, comprenant en outre :
une unité de chauffage de chambre configurée pour chauffer une chambre de torréfaction (16) à utiliser pour la torréfaction des grains de café pour la mesure des informations indiquant le changement de température des grains de café.

15. Produit de programme informatique pour l'identification d'un degré initial de torréfaction de grains de café, le produit de programme informatique étant stocké de manière tangible sur un support lisible sur ordinateur non transitoire et comprenant des instructions exécutables sur machine qui, lorsqu'elles sont exécutées sur un appareil selon la revendication 9, amènent ledit appareil à réaliser les étapes du procédé selon l'une quelconque des revendications 1 à 7.

100

S101

S102

Fig. 1

200

S201

S202

S203

S204

S205

S206

Fig. 2

300

S301

S302

S303

S304

Fig. 3

400

401

402

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008089986 A
- US 2006266229 A
- DE 4314874